# EUROPEAN PATENT APPLICATION

(11) **EP 1 918 866 A1**
(43) Date of publication of application: **07.05.2008**
(21) Application number: 07252651.0
(22) Date of filing: 29.06.2007
(51) Int. Cl.: G06Q 10/00

(54) **System and method for electronic visitation registration**

(30) Priority: 30.06.2006 US 480259
(71) Applicant: Evercom Systems, Inc., Dallas TX 75254-7476 (US)
(72) Inventor: Keiser, Luke, Frisco, TX 75034 (US)
(74) Representative: Jackson, Richard Eric

(57) **Abstract**

Disclosed is an electronic visitation registration (EVR) system for registering visitors to visit with residents of a controlled-environment facility, such as a correctional facility. In certain embodiments, EVR is operable to interact with visitors and determine whether to authorize a requested visitation session with a resident of the controlled-environment facility. Thus, in certain embodiments, the EVR can autonomously interact with a visitor and perform the registration process for such visitor, thereby alleviating the requirement of involvement by a facility employee for such registration. The EVR may be accessible local to the controlled-environment facility (e.g., as a kiosk), and/or it may be accessible via a communication network, such as the Internet. Thus, the EVR may allow a remote user to schedule and register for a future visit. Additionally, other services, such as funding an account or contacting a third party, may be available through the EVR.

## Description

### CROSS-REFERENCE TO RELATED APPLICATIONS

This application is related to co-pending and commonly assigned U.S. Patent Applications: Serial No. 10/135,878, filed 4/29/02, titled "INFORMATION MANAGEMENT AND MOVEMENT SYSTEM AND METHOD", Serial No. 10/602,233, filed 6/24/03, titled "SYSTEMS AD METHODS FOR TRANSACTION AND INFORMATION MANAGEMENT", Serial No. 10/952,327, filed 9/28/04 titled "SYSTEMS AND METHODS FOR MANAGEMENT AND DISSEMINATION OF INFORMATION FROM A CONTROLLED ENVIRONMENT FACILITY", Serial No. 10/135,833, now Published Application No. 2002/0194096, published 12/19/02, titled "OPTIMIZING PROFITABILITY IN BUSINESS TRANSACTIONS", Serial No. 10/947, 986 filed 9/23/04, titled "OPTIMIZING PROFITABILITY IN BUSINESS TRANSACTIONS", and U.S. Patent No. 6,836,540 issued 12/28/04 titled "SYSTEMS AND METHODS FOR OFFERING A SERVICE TO A PARTY ASSOCIATED WITH A BLOCKED CALL", the disclosures of which are hereby incorporated herein by reference.

### TECHNICAL FIELD

The present invention relates generally to information systems, and more particularly, to systems and methods for electronically registering visitors to a controlled-environment facility.

### BACKGROUND OF THE INVENTION

It is often desirable to regulate visitation to controlled-environment facilities. Examples of controlled-environment facilities include correctional facilities (e.g., municipal jails, county jails, state prisons, federal prisons, military stockades, juvenile facilities, and detention camps), healthcare facilities (e.g., hospitals, nursing homes, mental health facilities, and rehabilitation facilities, such as drug and alcohol rehabilitation facilities), restricted living quarters (e.g., hotels, resorts, camps, dormitories, and barracks), and the like. Certain controlled-environment facilities may be thought of as a small community or city, perhaps walled or otherwise access restricted, wherein various activities occur within the community and between the community and those outside the community in the daily operation thereof. Such a community includes a number of individuals and enterprises directly associated therewith, including management, staff, and inmates, residents, or patients (herein referred to as "residents"), and a number of individuals and enterprises indirectly associated therewith, including guests (e.g., friends and family of residents), vendors, government agencies, providers of services to residents, and individuals with a connection to the facility or its residents.

Generally, visitation to such a controlled-environment facility is monitored or restricted in some way. Typically, visitors to such a facility are required to be processed in some manner by the facility to obtain authorization for visiting with a resident of the facility. Such processing of a visitor may be referred to generally as "visitor registration." That is, visitors to such a controlled-environment facility typically may not visit with a resident of the facility without first registering with the facility to obtain authorization for such a visit. Such registration process aids the facility in managing visitation with its residents to, for example, maintain security within the facility. In a correctional facility, such as a prison, safety and security are often of paramount importance, and therefore the facility typically employs staff responsible for effectively processing visitors. To ensure the safety and security of a controlled-environment facility, the visitation staff interact with visitors and information systems to discover certain information about the visitors, such as the identity of the visitor, whether the visitor has any outstanding warrants, and whether the visitor has a criminal background. In an effort to ensure safety within the facility, visitation staff use such information to determine whether to authorize a particular visitor for a requested visitation session. Furthermore, controlled-environment facilities often accommodate a large number of visitors with limited space and limited staff. Therefore, to ensure safety and order within the visitation area, visitation staff must work as efficiently as possible while registering visitors, answering questions, and maintaining order.

Traditionally, to obtain a visitation session with an inmate of a prison, for example, a visitor begins by going to the visitation registration area of the prison and taking a number. For example, the visitor may pull tab number "98" from a ticket reel. Then, the visitor waits in the visitation waiting room until an employee (e.g., prison guard) calls the visitor's number. When the visitor's number is called, the visitor approaches the employee's desk, and the employee interacts with the visitor to determine whether to authorize the visitation session desired by the visitor. The employee asks which inmate the visitor wants to visit. Once the visitor identifies the inmate, the employee manually records the information (e.g., to a computer system). Next, the employee asks the visitor to identify himself, and the visitor may do so by producing identification such as a drivers license or other identification card. Once the visitor has properly identified himself, the employee manually records the information (e.g., to a computer system). The cumbersome task of recording the inmate's and visitor's information is typically desired for two reasons. First, the prison desires to make a record of the visit, and second, prisons are generally required to run background checks on all visitors. Therefore, the employee sends the recorded information to a background check agency, for example TLEX or NCIC, to conduct a background check. After reviewing the results of the background check, the employee determines whether to authorize the visitor for the requested visitation session. If the visitor is approved, the employee gives the visitor a card identifying a group to which the visitor is assigned. Then, the visitor waits with his group until the group is called, at which point the group proceeds to the visitation room to visit with the respective inmates with whom they registered to see.

The traditional system for visitor registration to such controlled-environment facilities as prisons has several shortcomings. First, the system is not efficient, and requires significant employee time for manually registering visitors. Further, the system is not visitor friendly, often leading to visitor confusion as to the registration process, which increases the level of dissatisfaction among the visitors and thus enhances security and disciplinary threats among the visitors. The process tends to lead to extended waiting periods, and due to limited space, overly crowded waiting rooms, which further enhances agitation among the visitors. As a result, facility employees become burdened with questions, complaints, and the difficult task of maintaining the order of a large, agitated crowd. Addressing such questions, complaints, etc. takes away from the employees' time in registering visitors, thus further reducing the efficiency of the process and compounding the problem. In an effort to speed up the process, employees are tempted to skip steps in the registration process, such as properly recording information or conducting background checks, thereby thwarting the registration process and potentially permitting dangerous individuals to access the visitation area. Further, because the registration process is performed manually, it is susceptible to human error, human bias, and inconsistent treatment of visitors by different employees.

### BRIEF SUMMARY OF THE INVENTION

Embodiments of the present invention provide systems and methods for electronic registration of visitors to a controlled-environment facility. Embodiments of such electronic visitation registration system have particular applicability within correctional facilities, such as jails, prisons, etc., but may likewise be employed in other controlled-environment facilities, such as healthcare facilities (e.g., hospitals, nursing homes, mental health facilities, and rehabilitation facilities, such as drug and alcohol rehabilitation facilities), restricted living quarters (e.g., hotels, resorts, camps, dormitories, and barracks), and the like. As discussed above, visitor registration is desirable in controlled-environment facilities, such as correctional facilities. In regulating a visitor's access to the residents of a facility, a registration process may be used, for example, to eliminate undesirable visitors and/or aid in compiling information regarding a visitation session, such as the identities of the visitor and resident visiting each other, the date and time of the visitation, etc. Such compiled information may be useful in investigative efforts, detecting patterns and relationships between different individuals, etc., which may be particularly useful in the context of a correctional facility.

However, the visitor registration process has traditionally been performed manually by employees of the facility. Thus, such traditional registration techniques have had such shortcomings as being inefficient, consuming an undesirably large amount of employee time, being susceptible to human error, and other shortcomings due to the above-described manual registration process. Certain embodiments of the present invention advantageously address one or more of such shortcomings and/or provide other advantages by enabling electronic registration of visitors to a controlled-environment facility. As described further herein, in certain embodiments, an electronic visitation registration system is operable to interact with visitors and determine whether to authorize a requested visitation session with a resident of the controlled-environment facility. Thus, in certain embodiments, the electronic visitation registration system can autonomously interact with a visitor and perform the registration process for such visitor, thereby alleviating the requirement of involvement by a facility employee for such registration.

While informational kiosks have been used in correctional facilities to provide certain information to visitors, such as hours of operation of the facility, etc., the kiosks have been limited to merely providing information. As discussed above, the tasks associated with visitor registration have traditionally required a visitor to interact with a facility employee. According to embodiments of the present invention, an electronic visitation registration system is provided to handle the registration process. Of course, in certain embodiments, the electronic visitation registration system may also provide information as with informational kiosks. In certain embodiments, the electronic visitation registration system further provides other services. For instance, in one embodiment the electronic visitation registration system supports interaction with a bail bondsman to request bail for an inmate of a correctional facility. As another example, in one embodiment, the electronic visitation registration system enables funding of an account for a resident of a controlled-environment facility.

In certain embodiments of the present invention, an electronic visitation registration system may be accessible local to the controlled-environment facility. For instance, the electronic visitation registration system may comprise a kiosk or other electronic terminal (e.g., personal computer, etc.) that is arranged in a lobby (or other designated area) of the controlled-environment facility. Thus, visitors to the controlled-environment facility may interact with the electronic visitation registration system to register to visit a resident of the facility and/or perform other services supported by the electronic visitation system.

In certain embodiments of the present invention, the electronic visitation registration system is accessible via a communication network, such as the Internet. Thus, in certain embodiments, a person desiring to visit a resident of a controlled-environment facility may, from a location remote from the controlled-environment facility, access the electronic visitation registration system via a communication device, such as a personal computer, telephone, etc. According to certain embodiments, the electronic visitation registration system allows a remote user to schedule and register for a future visit with a resident of a controlled-environment facility. Thus, if the visitation is denied or cannot be scheduled for the desired date/time, the visitor can be informed of this denial before traveling to the controlled-environment facility. Further, in certain embodiments, the electronic visitation registration system obtains contact information for the visitor (such as a telephone number, email address, etc.), and in the event that a scheduled visit is canceled (e.g., due to a lockdown of the facility or other reason) the electronic visitation registration system can contact the visitor to inform him of such cancellation. Of course, in certain embodiments, other services that may be offered by the electronic visitation registration system, such as funding an account, obtaining information, requesting bail, etc., may likewise be accessed remotely via the communication network.

In certain embodiments, when a visitor schedules and registers for visitation remotely, the visitor may also be required to undergo some form of registration when arriving at the controlled-environment facility for the scheduled visit. For instance, the visitor may interact with a local electronic visitation registration system (e.g., kiosk) or an employee of the facility to "check-in" for the scheduled visit. The check-in process may verify the visitor's identification and may obtain other verification and/or information about the visitor and/or the resident with whom the visitor is scheduled to visit. In one embodiment, when a visit is scheduled remotely, the electronic visitation registration system provides the visitor with a confirmation code, which the visitor inputs to a local kiosk at the facility when checking in for the scheduled visit. The kiosk may receive identification of the visitor, such as by reading an identification card input by the visitor and/or by capturing an image of the visitor (via a camera included in the kiosk). Once the kiosk has verified the identity of the registered visitor and/or performed other processes desired to authorize the visit, the kiosk may print a receipt that provides the visitor with certain information about the visitation session, such as the estimated start time for the session, an authorization code (which may be a barcode that can be optically scanned for information using known techniques) or other information from which facility personnel can confirm that the visitor is registered to visit a resident (as well as the identity of the resident with whom the visitor is registered to see).

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIG. 1 shows an example of an electronic visitation registration system according to one embodiment of the present invention.

FIG. 2 shows an example of a registration process according to one embodiment of the present invention.

FIG. 3 shows an example of a visitation area employing an electronic visitation registration system according to one embodiment of the present invention.

FIGS. 4A-4B show an exemplary operational flow of an electronic visitation registration system according to one embodiment of the present invention.

FIG. 5 shows an exemplary system for gathering information and relationally linking the information together according to one embodiment of the present invention.

### DETAILED DESCRIPTION OF THE INVENTION

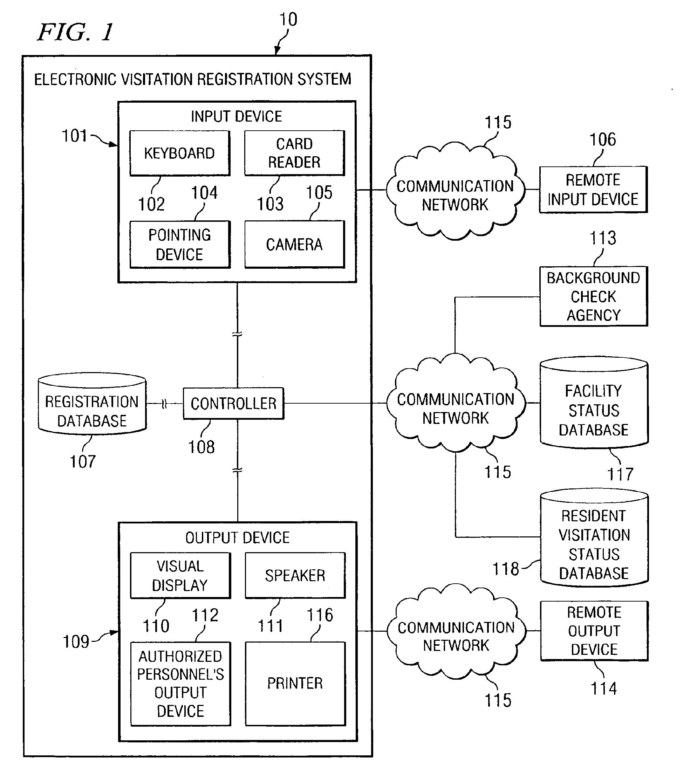

Directing attention to FIG. 1, an exemplary electronic visitation registration (EVR) system 10 according to one embodiment of the present invention is shown. EVR 10 may assist a controlled-environment facility in a number of ways including, but not limited to, registering visitors, compiling information about visitation sessions, answering questions, and conducting transactions. In this example, EVR 10 comprises an input device 101 for receiving information from a visitor, output device 109 for outputting information to a visitor and/or others, and a controller 108. As described further herein, various parts of EVR 10 may be implemented local to the controlled-environment facility and/or various parts of EVR 10 may be implemented remote from the controlled-environment facility. For instance, in certain embodiments, EVR 10 comprises a kiosk at a controlled-environment facility, wherein such kiosk provides the input devices 101, and output devices 109. Controller 108 may further be implemented in such kiosk, or controller 108 may be communicatively coupled to the kiosk (e.g., via a communication network 115 such as the Internet or other wide-area network (WAN), a local-area network (LAN), or other communication network). In certain embodiments, a visitor may interact with controller 108 from a location remote from the controlled-environment facility. For instance, a visitor may use the visitor's personal computer as input device 101 (e.g., illustrated as remote input device 106 of FIG. 1) and output device 109 (e.g., illustrated as remote output device 114 of FIG. 1) for interacting with controller 108 via a communication network 115, such as the Internet. In certain embodiments, controller 108 may be implemented to service a plurality of different controlled-environment facilities. For instance, controller 108 may be implemented at a centralized server for managing visitation registration and/or other services for a plurality of different controlled-environment facilities, such as a plurality of different prison locations.

Input device 101 may, for example, comprise one or more of a keyboard 102, card reader 103, pointing device (e.g., mouse, touch-screen display, etc.) 104, and imaging device 105 (e.g., camera for capturing video and/or still images). Of course, other exemplary input devices now known or later developed, such as optical scanners, telephone keypad, etc., may be included in addition to or instead of ones of the exemplary input devices shown in FIG. 1 for enabling a user input information to EVR 10.

Output device 101 may, for example, comprise one or more of a visual display (e.g., monitor) 110, audible output device (e.g., speaker) 111, an authorized personnel's output device 112, and printer 116. As discussed further herein, in certain embodiments, instructions, menus, and/or other information may be output via one or more of the output devices 109 to a visitor or other persons, such as to authorized personnel of the controlled-environment facility. For instance, authorized personnel's output device 112 (e.g., personal computer, telephone, etc.) may be communicatively coupled to EVR 10 via communication network 115, which may comprise a LAN, WAN (e.g., the Internet), etc. Of course, other exemplary output devices 109 now known or later developed, such as an email server (for sending output via email), message board (e.g., for displaying messages to visitors in a waiting room and/or to residents in the controlled-environment facility), telephone, etc., may be included in addition to or instead of ones of the exemplary output devices shown in FIG. 1 for enabling EVR 10 to output information to persons and/or other systems.

Furthermore, input device 101 and output device 109 may be implemented as (or communicatively coupled to) remotely located devices 106 and 114. For example, remote input device 106 and output device 114 may be part of a visitor's personal computer at the visitor's home, which is communicatively coupled to controller 108 via communications network 115. As a result, the visitor may input information and receive output information, such as visitation approval or denial, via the remote input/output devices at his home. such as visitation approval or denial, to the visitor at his home. Furthermore, if an approved visitation session is later canceled, controller 108 can forward a cancellation notice to remote output device 114.

Remote input device 106 and remote output device 114 provide a signification advantage to the visitor. For example, a visitor who lives a significant distance from the controlled-environment facility can request a visitation session from his home before making the journey to the facility. As a result, if the visitation session is denied for any reason, the visitor avoids a worthless commute, thereby saving time and aggravation. Accordingly, facility employees focus more time and attention on maintaining a secure and orderly visitation area because they are not wasting resources on pacifying an agitated visitor who has just made a long commute only to learn that his visitation is denied.

Controller 108 may comprise a processor and one or more processes (e.g., software processes) executing thereon for managing visitation registration (and, in certain embodiments, other services offered by the system). For instance, as described further herein, controller 108 is, in certain embodiments, operable to receive information via input device 101 that identifies the visitor and the resident of the controlled-environment facility with whom the visitor desires to visit. Controller 108 may be further operable to access certain other information, such as background information about the visitor from background check agency 113, information about the status of the controlled-environment facility stored to database 117, information about a visitation status assigned to the resident stored to database 118, etc. Database 117 may store certain information about the visitation of the controlled-environment facility, such as the facility's visitation hours, whether the facility has interrupted its normal visitations (e.g., due to security concerns, etc.), etc. Database 117 may store such information for a plurality of different controlled-environment facilities that are serviced by controller 108. Database 118 may store certain information about the residents of one or more controlled-environment facilities that are serviced by controller 108, such as the permitted number of visits to a given resident during a given time interval (e.g., each week or month), whether the facility has interrupted its normal visitations to a given resident (e.g., for disciplinary reasons, etc.), etc.

Controller 108 is further operable to process the gathered information to determine, based on predefined criteria (e.g., which may be specified by the corresponding controlled-environment facility), whether the visitor is to be authorized for the requested visitation session. If controller 108 determines that the requested visitation session is to be denied, controller 108 may output notification of such denial to the visitor via output device 109. In certain embodiments, controller 108 may include in the notification a reason for the denial. For instance, if the visitation session is denied because a pre-defined number of visits that are permitted to the resident for the given time interval (e.g., week or month) has been reached, the visitor may be informed of this reason. In such a case, controller 108 may, in certain embodiments, allow the visitor to schedule a future visit with the resident during a future time interval in which the resident will again be permitted visits. As another example, if the resident is being denied visitation for a period of time due, for example, to disciplinary reasons (e.g., as punishment), controller 108 may determine this (e.g., from resident visitation status database 118) and deny visitation on that basis, and controller 108 may notify the visitor via output device 109 as to the reason for the denial and allow the visitor to schedule a future visit for a time after the disciplinary period ends. As still another example, if the visitor is requesting visitation during a time that is outside the controlled-environment facilities permitted visitation hours (as may be determined from facility status database 117), controller 108 may deny visitation and notify the visitor as to the reason for the denial.

Similarly, if controller 108 determines that the requested visitation session is authorized, controller 108 may output notification of such authorization to the visitor via output device 109. The output notification may include information such as the estimated wait time until the visitation session will begin and instructions for the visitor to follow to conduct the visitation session (e.g., where to wait, what actions are permitted and not permitted during the visitation session, etc.). The output notification may also include information that indicates that the visitor is authorized for the visitation session, as well as identifying the resident with whom the visitor is authorized to visit.

In certain embodiments, visitor registration information is stored to a computer-readable medium, such as to registration database 107 shown in FIG. 1. Various information captured during the registration process may be stored, such as information relating to the identity of the visitor (e.g., information captured from an identification card scanned by card reader 103, an image of the visitor captured during the registration process by camera 105), information relating to the identity of the resident with whom the visitor desires to visit, information relating to the date and time of the registration, information gathered by controller 108 (e.g., background check information, etc.), and other information relating to the registration process.

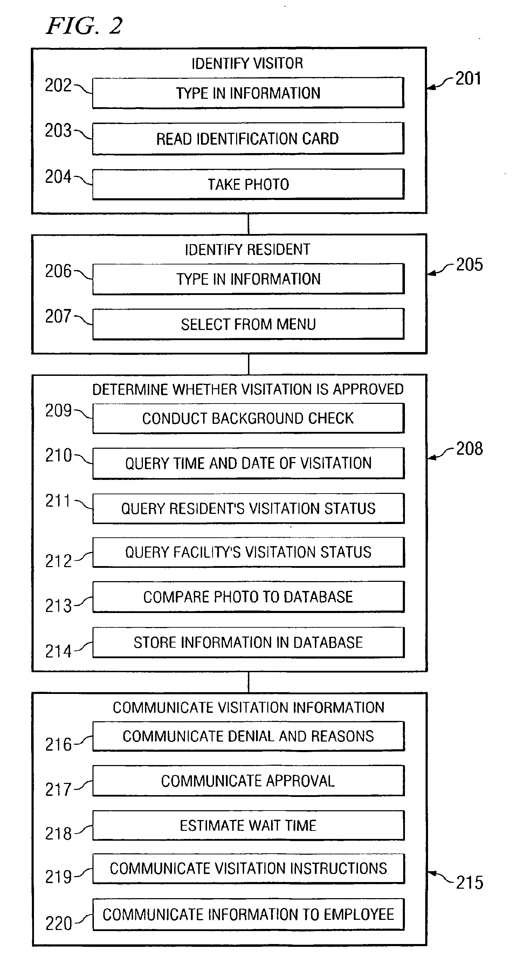

Exemplary operation of EVR 10 according to one embodiment of the present invention is shown in FIG. 2. A visitor desiring a visitation session with a resident of a controlled-environment facility accesses EVR 10 (e.g., either remotely or locally). In operational block 201, EVR 10 identifies the visitors. Controller 108 may prompt the visitor for all or a portion of identification information via output device 109, such as by presenting a registration menu or form to the visitor on display 110. As part of identifying the visitor, the visitor may, in block 202, input identification information, such as his name, address, date of birth, and/or a variety of other identification information, utilizing keyboard 102 and/or pointing device 104. In certain embodiments, the visitor inputs identification information by swiping his identification card, for example a driver's license, through card reader 103 in block 203. In certain embodiments, card reader 103 is operable to read a magnetic strip on the identification card thereby collecting certain identification information for the visitor. Likewise, camera 105 may, in block 204, capture an image of the visitor during the registration process. Such an image may be stored to registration database 107, along with other information captured during the registration process, to enable an authorized user to later retrieve such information and verify the image of the visitor registering for the visitation session. This may be helpful, for instance, when a person under suspicion is asserting not to have visited the resident, wherein the image data (along with other registration information) may provide evidence of the person's visit. Additionally, in certain embodiments, the captured image data may be used to compare with, for example, image data captured from an identification card to ensure a sufficiently close match. This may aid in detecting when a visitor is posing as another person (e.g., using another person's identification card, etc.). Further still, in certain embodiments, the captured image data may be compared with images of persons of interest, such as known criminals, terrorists, victims, etc., to enable the facility to detect when a person of interest is interacting with EVR 10.

In operational block 205, EVR 10 identifies the resident of the controlled-environment facility whom the visitor desires to visit. For instance, the visitor may use input device 101 to input information identifying such resident. For example, the visitor may input the resident's name and/or other identification information in block 206 by using keyboard 102 and/or pointing device 104. In certain embodiments, the visitor may select the resident from a menu presented to the visitor via output device 109 of EVR 10, as shown in block 207.

Also, other information about the registration may be collected by controller 108. For instance, in certain embodiments the visitor uses input device 101 to enter the time and date of the requested visitation session. Accordingly, the visitor requests either an immediate visitation or schedules a visitation for the future. Further, the controller 108 may record the current date and time during which the visitor is registering.

Next, in block 208, controller 108 determines whether to approve (or authorize) the requested visitation session. The determination may be based on information input to the EVR by the visitor, as well as other information gathered by controller 108, such as background check information for the visitor (e.g., from background check agency 113), visitation status of the facility (e.g., from facility status database 117), visitation status of the resident (e.g., from resident visitation status database 118), etc. Thus, controller 108 may make the determination of whether to approve the visitation based on a variety of different information. In certain embodiments, controller 108 determines whether the requested visitation satisfies a predefined criteria, which may be defined by the given controlled-environment facility in which the resident with whom the visitor desires to visit resides. For instance, the criteria defined for a given facility may specify that to authorize a visit the following must all be true: a) the resident's permitted number of visits during the current time interval has not been reached, b) the requested visitation session is during permitted facility visitation hours, and c) no negative information returned in the background check on the visitor. As another example, another facility may specify that to authorize a visit the following must all be true: a) the requested visitation session is during permitted facility visitation hours, and b) no outstanding warrant for the visitor's arrest. Other facilities may define additional or different criteria on which controller 108 is to base its determination of whether to authorize a requested visitation session. Further, different visitation criteria may be defined for different residents and/or for different visitors. For instance, a given correctional facility may define a more stringent criteria for obtaining visitation authorization for a certain segment of its inmates (e.g., convicted felons) than for another segment of its inmates. Similarly, a given correctional facility may define a more stringent criteria for suspected criminal affiliates of an inmate than for other visitors, and/or a correctional facility may define a less stringent criteria for family members of an inmate than for other visitors, etc.

In certain embodiments, controller 108 takes certain actions to gather information on which its determination of whether to authorize visitation may be based. For instance, in block 209 controller 108 requests a background check on the visitor (e.g., from background check agency 113). The background check may comprise a criminal background check, for example. In gathering background information about the visitor, controller 108 may send the visitor's identification information over communication network 115 to a background checking agency 113, such as TLEX and/or NCIC which are governmental agencies that conduct background checks for controlled-environment facilities. The agency then returns the requested background-check information to controller 108 over communication network 115. The returned background-check information may include, but is not limited to, the visitor's criminal history, whether the visitor has outstanding warrants, whether the visitor is flagged as a threat, the visitor's credit scores, and any other background information useful in controller 108's determination of whether the visitor should be approved.

If the background check returns negative information, the controller 108 may, depending on the authorization criteria defined for the controlled-environment facility, deny the requested visitation session. Additionally, if the background check indicates that the visitor is a person of interest (e.g., has an outstanding warrant for his arrest, etc.), then controller 108 may notify authorized personnel (e.g., security guards) of this information, particularly if the visitor is interacting with EVR 10 local to the controlled-environment facility, so that the visitor may be detained. For instance, controller 108 may trigger a telephone call to an authorized personnel's telephone to inform the authorized personnel that the visitor attempting to register is wanted.

In certain embodiments, controller 108 may further request information from the visitor, in block 210, regarding the desired time and date of the visitation session. In this manner, controller 108 may use this information to determine (e.g., based on information in databases 117 and 118) whether to authorize the visitation session. Additionally, in blocks 211-212 controller 108 may query the resident's visitation status information in database 118 and the facility's visitation status information in database 117. Again, this information may be used to determine whether the requested visitation session is to be authorized.

For instance, while considering whether a visitation session should be approved, controller 108 may evaluate the visitation status information stored to database 118 for the requested resident. Residents' visitation status may vary from each other. For example, one resident may have visitation privileges revoked for poor behavior, while another resident may require accommodations due to a disability. In another example, one resident may be allowed three visitation sessions per week, while another resident is only allowed one visitation session per month. Further still, one resident may have five visitation sessions remaining available for a given week, while another resident's schedule may be completely full. Controller 108 may determine whether the resident's status permits authorization of a visitation session for the requested date by querying database 118.

The foregoing determination may provide a significant advantage for visitors. For example, suppose a visitor remotely accesses EVR 10 and attempts to schedule a visitation session with a given resident of a facility for the following week, and the EVR denies the visitation session because the resident's visitation schedule is already full. As a result, the visitor saves time and aggravation because the visitor has not taken off work and/or traveled a long distance just to have his visitation denied. Accordingly, facility employees focus more time and attention on maintaining a secure and orderly visitation area because they are not wasting resources explaining to an agitated visitor why his visitation session has been denied.

Another factor controller 108 may consider in block 212 is the visitation status of the facility. For example, the facility may be in "lock-down" status because a resident is missing or a riot has recently been encountered within the facility. Likewise, the facility may be short staffed on a particular day (e.g., due to inclement weather, etc.) or undergoing construction. For any number of reasons, the facility may decide not to accept visitors during a given period, and controller 108 determines whether the requested visitation session falls into such a restricted period by querying facility visitation status database 117. If the facility is not accepting visitors on the requested day, controller 108 will deny the requested visitation session and record the denial in registration database 107. However, if the facility is accepting visitors on the requested day, controller 108 will continue considering other factors regarding whether the visitation session should be approved.

In block 213, controller 108 may compare an image of the visitor captured in block 204 to stored image information, such as an image scanned from the visitor's identification card, images of persons of interest, etc. In certain embodiments, controller 108 may determine whether to authorize the requested visitation session based at least in part on the comparison of images. Further, in certain embodiments, if the image comparison indicates that the visitor is a person of interest (e.g., has an outstanding warrant for his arrest, is a suspected terrorist, etc.), then controller 108 may notify authorized personnel (e.g., security guards) of this information, particularly if the visitor is interacting with EVR 10 local to the controlled-environment facility, so that the visitor may be detained. For instance, controller 108 may trigger a telephone call to an authorized personnel's telephone to inform the authorized personnel that the visitor attempting to register is a person of interest.

In block 214, various information gathered during the registration process may be stored to registration database 107, such as the date and time of the registration, the identity of the visitor, the identity of the resident whom the visitor requested to visit, an image of the visitor captured in block 204, the visitor's background check information, the resident's visitation status, the facility's visitation status, etc. As described further herein, such registration information may later be used for investigative purposes and/or as evidence in certain embodiments. Further, in certain embodiments, the actual visitation session is recorded and/or other information pertaining to the visitation session may be recorded, and such recorded information may be relationally linked to the corresponding registration information. Thus, for instance, in certain embodiments the registration information gathered for a given visitation session is stored, and other information about the visitation session (e.g., an audio and/or video recording of the visitation session) is stored; and all of such information is relationally linked together for the given visitation session. Accordingly, from such information one may verify that the visitor registered for the visitation session with the resident (including an image of the visitor doing so), as well as retrieve the other information relating to the visitation session (e.g., recording of the visitation session)

In block 215, controller 108 communicates visitation information. Such visitation information may be communicated to the visitor and/or to other personnel. For instance, if controller 108 determines to deny the request visitation session, the controller may communicate notification of such denial, as well as reasons for the denial, in operational block 216. Similarly, if controller 108 authorizes the requested visitation session, the controller may communicate notification of such authorization in block 217. Such notification of denial or authorization may be communicated in any of various different ways, such as by printing (via printer 116) a receipt that has such notification printed thereon, by displaying the notification on display 110, and/or by audibly outputting notification (e.g., speech) via speaker 111. In certain embodiments, the controller also outputs an estimated wait time for the visitation session in block 218. The controller may, for example, access a database or other information that indicates the number of visitors scheduled ahead of this visitor, the length of the other visitation sessions, the number of operable visitation areas, and/or other relevant information, and estimate a wait time until the desired visitation session will begin. Controller 108 may further output visitation instructions regarding how to proceed with the visitation session in block 219 (e.g., where to wait, what articles can and cannot be taken into the visitation area, and other information). The estimated wait time of block 218 and the instructions of block 219 may each be output in any of the output techniques mentioned for the notification of denial or authorization, as examples.

Further, as mentioned above, in certain instances controller 108 may output information to authorized personnel, such as an employee of the controlled-environment facility, security guard, etc., in block 220. For instance, if determined that the visitor is a person of interest, controller 108 may communicate notification of the visitor being a person of interest to an authorized personnel.

The exemplary electronic visitation registration process described above provides significant advantages for the facility. First, the electronic visitation registration process alleviates manual involvement by facility employees, thereby improving efficiency of the employees and/or minimizing the amount of staff required for the facility. Further, the electronic visitation registration system is operable to gather information and evaluate a visitor against a predefined criteria for a given facility, and thus deny facility access to dangerous or otherwise undesirable visitors. Accordingly, visitation employees are better able to maintain order in the waiting area because undesirable visitors are filtered out. Furthermore, denying visitation sessions to visitors with certain criminal backgrounds helps maintain the safety and security of the controlled-environment facility as a whole. For example, denying visitation sessions to all visitors with drug trafficking convictions will help reduce the drug activity within the facility.

In certain embodiments, various information collected during the registration process may be communicated to an authorized personnel of the facility for monitoring. Thus, for instance, an authorized personnel may monitor the registration process without being required to interact with the visitor (and potentially without the visitor even being aware of such monitoring). As a result, the authorized personnel may be well informed regarding the identities and backgrounds of visitors, the number of visitation sessions scheduled for the day, and each visitor's respective estimated wait time.

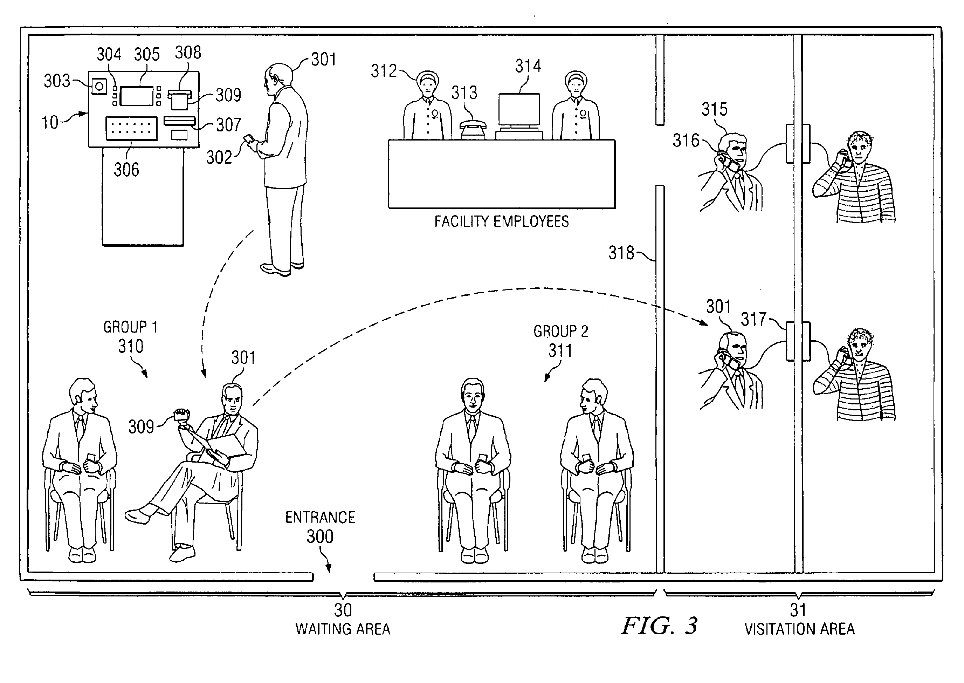

Directing attention now to FIG. 3, an embodiment of conducting a visitation session using EVR 10 according to one embodiment is shown. In this example, visitor 301 enters the controlled-environment facility through entrance 300 and approaches a kiosk implementing EVR 10. Display monitor 305 and/or speakers 304 prompt visitor 301 to input his identification information. The facility in this example requests visitor 301's name, address, place of employment, date of birth, and a variety of other identifying information. Visitor 301 then inputs the requested information using keyboard 306 and/or swiping his identification card 302 through card reader 307.

Visitor 301 also selects the resident with whom he wants to visit. Visitor 301's selection may be made by selecting the resident from a resident list displayed on monitor 305, by inputting the resident's name using keyboard 306, and/or by any other inputting method desired by the facility.

Once visitor 301 finishes inputting all the information desired by the facility, EVR 10 determines whether to approve the requested visitation session. As explained above, EVR 10 considers a number of factors to approve or deny a visitation session. Once a determination is made, EVR 10 communicates the determination to visitor 301. If the visitation is denied, EVR 10's printer 308 may print a receipt 309 having printed thereon information notifying the visitor of the denial and explaining why the requested visitation session was denied. Alternatively, the denial and reasons for the denial may be communicated through monitor 305 and/or speakers 304. EVR 10 may also communicate the denial and reasons for denial to authorized personnel (e.g., facility employees) 312 through telephone 313 and/or computer 314, so that authorized personnel 312 are aware the visitation has been denied and why. Further, the denial and reasons therefore may be stored to registration database 107, which may be accessible by the authorized personnel (e.g., using computer 314) so that they can retrieve such information if so desired.

If the visitation request is approved, the approval is communicated to visitor 301 by printing an approval receipt 309 and/or via monitor 305 and/or speakers 304. Furthermore, visitation information is communicated to visitor 301 on receipt 309, display 305 and/or speakers 304. Such visitation information may inform visitor 301 regarding the visitation process, visitation rules, and may include an estimated wait time.

Outputting visitation information provides a significant advantage to the visitor. For example, if the visitor's estimated wait time is two hours, the visitor may be free to leave the facility to eat lunch and/or run errands. As a result, the visitor does not become agitated from sitting in a crowded waiting room for an undisclosed period of time. Furthermore, visitation information prevents confusion. Instructions detailing where to wait, what can and cannot be brought into the visitation area, and explaining that communications can and will be documented keep the visitor informed and prevents confusion, thereby decreasing visitor dissatisfaction and minimizing the burden on the authorized personnel 312 in dealing with the visitors.

Outputting visitation information also provides an advantage for the facility employees. When visitors leave the waiting area for hours at a time, the employee-to-visitor ratio is lowered, and the employees have a greater ability to maintain a safe and orderly facility. Furthermore, well informed visitors do not ask as many questions. Accordingly, employees are freed from answering numerous questions thereby allowing them to focus on more important tasks.

As explained, once visitor 301 receives his approval and visitation information, he can choose to wait in his designated group or leave and return at his estimated visitation time. In this example, suppose visitor 301 left for lunch, and has now returned to waiting area 30 to wait for his visitation session. The visitors are divided into various visitation groups, shown in this example as group one 310 and group two 311. Visitor 301 has been assigned to group one 310 and is holding receipt 309.

When his group is called, he takes his receipt and approaches facility employees 312. If the facility desires, employees 312 may check receipt 309 to ensure visitor 301 is in fact approved and belongs in group one. Further information may be captured at this point, such as again capturing an image of the visitor as he enters the visitation area 31. Instead of or in addition to facility employees checking the receipt 309, in certain embodiments the receipt may be scanned (e.g., a scanner may read a barcode thereon) to verify that the visitor is authorized for this visitation session. Employees 312 may then permit visitor 301 to cross barrier 318 and enter visitation area 31. In this example, visitation area 31 is a secured room whereby resident 315 and visitor 301 are separated by secured glass and must communicate through a phone as shown in FIG 3. Likewise, visitation area 31 could be an open room whereby resident 315 and visitor 301 are not separated by a physical structure. Visitation area 31 may be configured in any number of ways.

Once in visitation area 31, visitor 301 approaches his assigned booth, as indicated in the visitation information, and picks up the receiver to phone 316. Likewise, resident 315 picks up the receiver to phone 316, and the visitation session begins. During the visitation session, recorder 317 records the communication. Recorder 317 comprises, but is not limited to, an audio recording device which records the conversation, a still camera which takes photos of the visitation session, and a video camera which captures video of the visitation session. Such recorded communication may be stored to a computer-readable medium, such as a database, and as described further herein, such information may be relationally linked with the gathered registration information for the corresponding visitation session. When the visitation session is complete, visitor 301 exits visitation area 31 and chooses to either leave the facility or conduct another transaction with EVR 10.

According to certain embodiments herein, EVR 10 may be used not only for visitor registration, but EVR 10 may also provide other services. As an example, EVR 10 may provide information, such as answers to frequently asked questions, regarding the controlled-environment facility. As further examples, EVR 10 may enable a user to fund (or otherwise update) an account for a resident of the facility, request bail for a correctional facility, contact an attorney, contact a towing company, contact a physician, etc. A user may use EVR 10 for any of these services in addition to or instead of for visitor registration. For example, a user may desire to request bail for an inmate of a correctional facility, but not desire to schedule a visit with the inmate. As with conducting visitor registration, in certain embodiments one or more of these other services may be made available by EVR 10 to a remote user via a communication network.

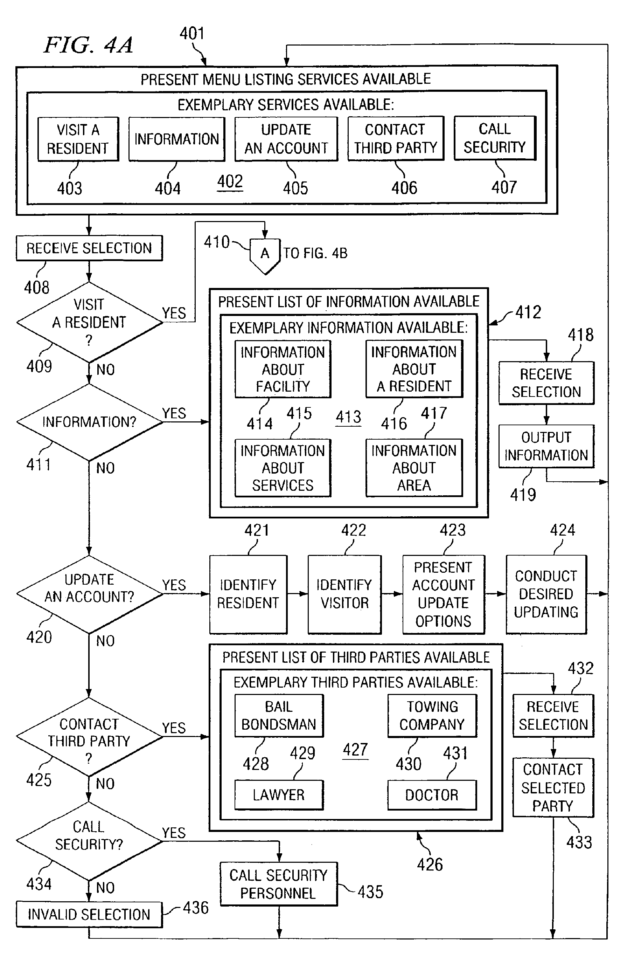

Directing attention to FIGS. 4A-4B, an exemplary operational flow of EVR 10 according to one embodiment of the present invention is shown. In this example, EVR 10 offers a variety of different services in addition to visitor registration. Thus, as shown in FIG. 4A, EVR 10 presents a menu listing the services available through such EVR 10 in operational block 401. Exemplary services that may be available in certain embodiments are listed in block 402, which include visitation registration 403, obtaining information 404, updating an account 405, contacting a third party 406, and calling security 407. Thus, a user may select (e.g., using an input device 101, such as keyboard 102 and/or pointing device 104) a desired service. Such a selection is received as input to EVR 10 in block 408.

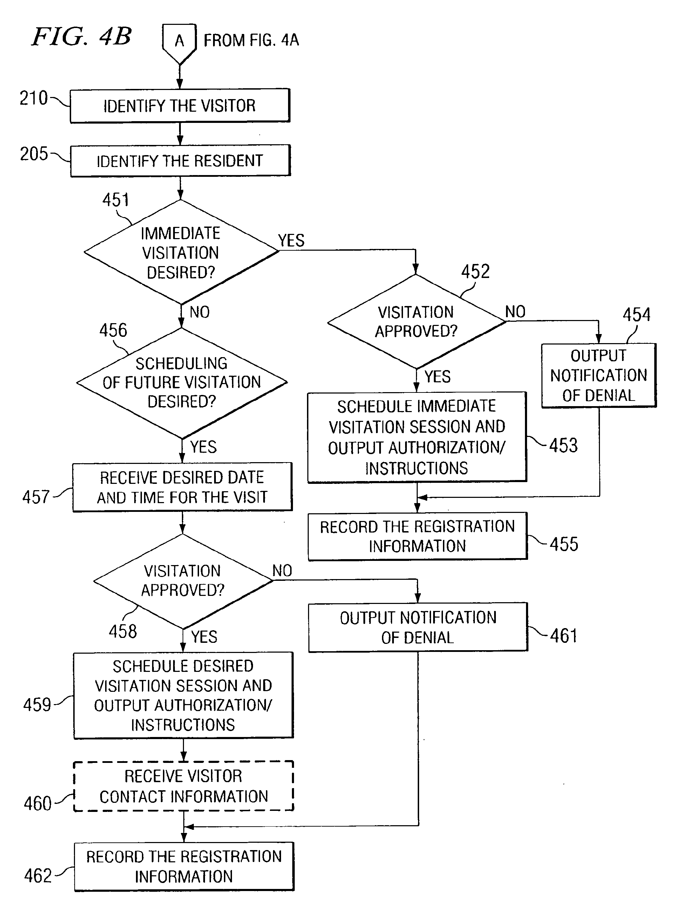

In block 409, EVR 10 determines whether the desired service is visitation registration. If so, then EVR 10 performs the appropriate actions for determining whether a desired visitation session is authorized, such as in the exemplary flow of FIG. 2 described above. In the exemplary embodiment illustrated in FIGS. 4A-4B, EVR 10 performs a registration process as shown in FIG. 4B.

Turning briefly to FIG. 4B, EVR 10 identifies the visitor in block 201 (as discussed above with FIG. 2), and identifies the resident with whom the visitor desires to visit in block 205 (as discussed above with FIG. 2). In block 451, EVR 10 determines whether the visitor desires an immediate visitation (e.g., if the visitor is at the facility desiring to visit the resident as soon as possible). This may be determined based on input from the visiting specifying whether he wants to schedule a future visit or visit with the resident as soon as possible. If the visitor desires an immediate visitation, operation advances to block 452 where EVR 10 determines whether the visitation is approved. As discussed above, such approval may be determined based on a number of factors and a predefined criteria for the facility. If the visitation is approved, EVR 10 schedules a visitation session for as soon as possible, and outputs information notifying the visitor of such authorization, instructions, estimated wait time, etc., in block 453. If the visitation is denied in block 452, then operation advances to block 454 to output notification to the visitor of the denial. In either event, operation then advances to block 455 where EVR 10 records registration information (e.g., to registration database 107).

If determined in block 451, that an immediate visitation session is not desired, operation advances to block 456 where EVR 10 determines whether the visitor desires to schedule a future visitation session. Again, this may be determined based on input from the visiting specifying whether he wants to schedule a future visit or visit with the resident as soon as possible. If the visitor desires to schedule a future visit, operation advances to block 457 where EVR 10 receives input specifying the desired date and time for the visit. In block 458, EVR 10 determines whether the visitation is approved. As discussed above, such approval may be determined based on a number of factors and a predefined criteria for the facility. If the visitation is approved, EVR 10 schedules the desired visitation session, and outputs information notifying the visitor of such authorization, instructions, etc., in block 459. In certain embodiments, EVR 10 may receive visitor contact information in block 460 which EVR 10 can use to notify the visitor if the scheduled visitation is later canceled for some reason. If the visitation is denied in block 458, then operation advances to block 461 to output notification to the visitor of the denial. In either event, operation then advances to block 462 where EVR 10 records registration information (e.g., to registration database 107).

Returning to FIG. 4A, if determined in block 409 that the desired service is not visitation registration, operation advances to block 411 where EVR 10 determines whether the desired service is obtaining information. If so, operation advances to block 412 where EVR 10 presents a list of types of information available. Exemplary types of information that may be available in certain embodiments are listed in block 413, which include information about the controlled-environment facility 414 (e.g., hours of operation, etc.), information about services offered by the EVR (e.g., information about visitation, information about resident accounts, information about third-party services, etc.) 415, information about a resident 416 (e.g., the resident's visitation schedule, the resident's court date schedule, the resident's account balance, etc.), and information about the area in which the facility is located 417 (e.g., surrounding shops, restaurants, points of interest, etc., which may be of use to visitors awaiting an upcoming visitation session). Various other types of information may be available instead of or in addition to the exemplary types of information shown in FIG. 4A. Thus, a user may select (e.g., using an input device 101, such as keyboard 102 and/or pointing device 104) a desired type of information. Such a selection is received as input to EVR 10 in block 418, and in block 419 EVR 10 outputs the desired information (e.g., via one or more of output devices 109).

If determined in block 411 that information is not desired, operation advances to block 420 where EVR 10 determines whether the desired service is updating a resident's account. Various types of "updating" operations may be available through EVR 10, such as creating an account for a resident, funding an account, changing account options, etc. If determined that updating an account is desired, operation advances to block 421 where EVR 10 identifies the resident for whom an account is to be updated. Such identification may be performed, for example, in the manner discussed above in block 205 of FIG. 2. In block 422, EVR 10 identifies the visitor, which may be performed, for example, in the manner discussed above in block 201 of FIG. 2. In block 423, EVR 10 presents various account update options, such as creating an account, funding an account, etc., and in block 424 the visitor interacts with EVR 10 to conduct the desired updating of an account.

If determined in block 420 that an account update is not desired, operation advances to block 425 where EVR 10 determines whether the desired service is contacting a third party. If so, operation advances to block 426 where EVR 10 presents a list of types of third parties available to contact through the EVR. Exemplary types of third parties that may be available in certain embodiments are listed in block 427, which include bail bondsmen 428, lawyers, 429, towing companies 430, and doctors (or other medical personnel) 431. Various other types of third parties may be available to contact via EVR 10 instead of or in addition to the exemplary types of parties shown in FIG. 4A. Thus, a user may select (e.g., using an input device 101, such as keyboard 102 and/or pointing device 104) a desired type of third party to contact. Such a selection is received as input to EVR 10 in block 432. Thereafter, the visitor may be presented a list of parties of the selected type which the EVR 10 can contact. Such list of parties may be those parties who have registered with the EVR system, for example. In block 433 EVR 10 contacts the selected party. Such contact may be performed in any of a variety of different ways. For instance, in one embodiment, EVR 10 may allow the visitor to send an email message to the selected party. In another embodiment, EVR 10 may present a form which the visitor can fill out and send (e.g., via an email, fax, etc.) from the EVR to the selected party. In another embodiment, EVR 10 may be capable of calling the selected party to enable the visitor to speak with such party (e:g., a telephone receiver for the visitor's use may be included on EVR 10).

If determined in block 425 that the visitor does not desire to contact a third party, operation advances to block 434 where EVR 10 determines whether the visitor desires to call security. If so, EVR 10 calls the facility's security personnel in block 435. In certain embodiments, the security personnel may be notified of the call from the EVR location, while in other embodiments the visitor may be communicatively coupled (e.g., via telephone) with the security personnel.

If determined in block 435 that the visitor does not desire to contact security personnel, operation advances to block 436 where EVR 10 determines that the selection was invalid and returns to the menu in block 401.

Of course, in other embodiments the operational flow of EVR 10 may differ from the example shown in FIGS. 4A-4B. For instance, while EVR 10 obtains the identity of the visitor for only certain services in the above example, in certain embodiments, EVR 10 may obtain the identity of the visitor for every service requested. In this manner, EVR 10 may perform a background check, photo comparison, etc. to determine whether the visitor is a person of interest irrespective of the service requested by the visitor (e.g., even if the visitor is merely requesting information). This may be beneficial to the security of the facility, as well as in aiding in the capture of wanted persons.

Examples of various other services that may be offered via EVR 10 include those described in co-pending and commonly assigned U.S. Patent Applications: Serial No. 11/125,842, filed 5/10/05 titled "PROCESSOR-BASED SELF-SERVICE TERMINALS USED WITH RESPECT TO CONTROLLED ENVIRONMENT FACILITIES", Serial No. 10/602,233, filed 6/24/03 titled "SYSTEMS AND METHODS FOR TRANSACTION AND INFORMATION MANAGEMENT", and Serial No. 10/952,327, filed 9/24/04 titled "SYSTEMS AND METHODS FOR MANAGEMENT DISSEMINATION OF INFORMATION FROM A CONTROLLED ENVIRONMENT FACILITY", the disclosures of which are incorporated herein by reference.

Certain embodiments of the present invention enable information gathered by EVR 10 during visitation registration (and/or during other services offered by the EVR) to be relationally linked with other information recorded for a visitor's visit to the facility. For instance, the visitor may register for and be approved for a visit with a resident, and the information gathered during the registration process may be stored (e.g., to registration database 107). Thereafter, the actual visitation session with the resident may be recorded (e.g., audio and or video recording of the session may be captured), and the recording may be stored to a computer-readable medium (e.g., a database). In accordance with embodiments of the present invention, the registration information may be relationally linked with the recorded information of the corresponding visitation session such that users can later retrieve a full "trail" of the visitors visitor's visit to the facility.

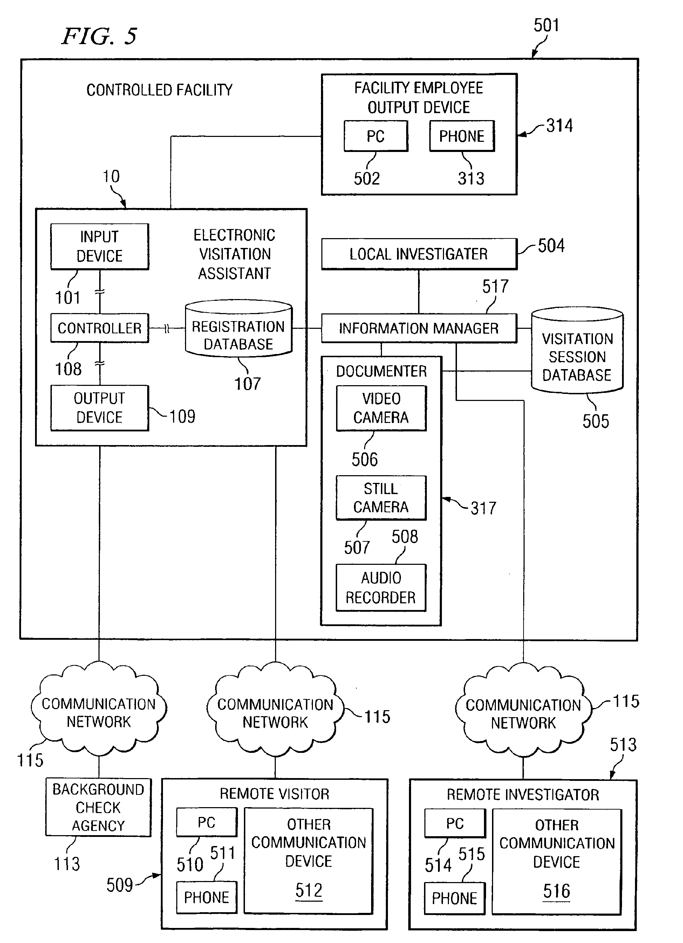

Directing attention to FIG. 5, an exemplary system for gathering information and relationally linking the information together according to one embodiment of the present invention is shown. In this example, two databases are provided: registration database 107 and visitation session database 505. As explained above, when a visitor registers to visit a resident, EVR 10 collects information about the visitor including, but not limited to, the visitor's identity, address, occupation, photo, etc. Accordingly, the various information gathered and used by controller 108 in determining whether to approve a visitation session may be stored as a registration record in registration database 107.

If the visitation session is authorized, then once the visitation session begins, the visitor and resident enter the visitation area and begin communicating. This communication may be recorded by recorder 317. Recorder 317 may employ any number of recording devices, such as still camera 507, audio recorder 508, and/or video camera 506. Recorder 317 captures and stores the recorded data as a visitation session record in visitation session database 505.

Information manager 517, which may be implemented as a software process executable by a processor, is operable to access both registration database 107 and visitation session database 505 and manages the information therein. Once a visitation session is complete, information manager 517 associates a registration record with its corresponding visitation session record. As a result, registration information is coupled to its corresponding visitation session, and the coupled information is utilized to track visitation session participants and the matters they discuss. Of course, in other embodiments, any suitable technique now known or later developed for relationally linking registration information with corresponding visitation session information may be employed.

The relationally-linked information may be very useful for investigating the activities of residents and/or visitors of interest, for example. For example, investigator 504 may suspect a resident of trafficking drugs into controlled-environment facility 501. To determine whether the suspected trafficking is occurring, investigator 504 may accesses information manager 517 to analyze a particular resident's documented visitation sessions and review the resident's communications. Likewise, because the visitation session is coupled to its corresponding registration information, investigator 504 determines the identity and background of the resident's visitors thereby assisting in the drug trafficking investigation. If investigator 504 determines a particular resident is participating in drug trafficking, the facility may stop the activity and the documented communications may be used as evidence against the resident. Furthermore, once investigator 504 has determined a particular visitor assists in the drug trafficking, the investigator may identify other residents the particular visitor has visited, and those resident's communications will be reviewed to determine if those residents are also involved in inappropriate activities. Finally, once the investigation is complete, investigator 504 may use the documented evidence against the visitor as well.

In another example, the investigator may be a remote investigator 513 and located outside controlled-environment facility 501. Remote investigator 513 may access information manager 517 via communication network 115. As a result, visitation sessions from a plurality of controlled-environment facilities may be reviewed by a single investigator. Accordingly, in one example a large-scale drug trafficking operation may be tracked by remote investigator 513, and the entire trafficking operation may be documented along with the identity and location of each trafficking participant.

When implemented in software, elements of the present invention are essentially the code segments for implementing such elements. The program or code segments can be stored in a computer-readable medium or transmitted by a computer data signal embodied in a carrier wave, or a signal modulated by a carrier, over a transmission medium, as examples. The "computer-readable medium" may include any medium that can store or transfer information. Examples of the computer-readable medium include an electronic circuit, a semiconductor memory device, a ROM, a flash memory, an erasable ROM (EROM), a floppy diskette, a compact disk CD-ROM, an optical disk, a hard disk, a fiber optic medium, a radio frequency (RF) link, etc. The computer data signal may include any signal that can propagate over a transmission medium such as electronic network channels, optical fibers, air, electromagnetic, RF links, etc. The code segments may be downloaded via computer networks such as the Internet, Intranet, etc. The exemplary operational flows of FIGS. 2 and 4A-4B may, for example, be implemented via software executable by a processor.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. An electronic visitation registration system comprising:
an input device operable to receive input from a visitor of a facility, wherein said input comprises input identifying said visitor and input identifying a resident of said facility whom said visitor desires to visit;
an output device operable to output information to said visitor; and
a controller operable to determine whether said visitor is approved for a visitation session with the identified resident, wherein said controller is operable to determine whether said visitor is approved based at least in part on said input from said visitor.

2. The system of claim 1 wherein said input device is operable to receive a selection from a menu presented to said visitor, whereby said visitor selects said resident from a plurality of residents.

3. The system of claim 1 wherein said input device comprises:
a magnetic strip reader operable to read at least a portion of said input from a magnetic strip located on an identification card.

4. The system of claim 1 wherein said input device comprises an image capture device operable to capture an image of said visitor.

5. The system of claim 1 further comprising:
computer-readable storage device for storing information gathered by the electronic visitation registration system.

6. The system of claim 5 further comprising:
computer-readable storage device for storing recorded communication between said visitor and the resident captured during the visitation session.

7. The system of claim 6 further comprising:
an information manager for relationally linking information gathered by the electronic visitation registration system with recorded communication for a corresponding visitation session.

8. The system of claim 1 wherein said facility is a controlled-environment facility.

9. The system of claim 8 wherein said controlled-environment facility is a correctional facility.

10. The system of claim 1 wherein said controller is further operable to conduct a background check on said visitor.

11. The system of claim 10 wherein said background check comprises a criminal background check.

12. The system of claim 10 wherein said controller is operable to determine whether said visitor is approved based at least in part on said background check.

13. The system of claim 1 wherein said controller is operable to determine a current status of the facility, and wherein said controller is operable to determine whether said visitor is approved based at least in part on the determined current status of the facility.

14. The system of claim 1 wherein said controller is operable to determine a visitation status of the resident, and wherein said controller is operable to determine whether said visitor is approved based at least in part on the determined visitation status of the resident.

15. The system of claim 1 wherein said output device comprises a printer operable to print a receipt having information thereon.

16. The system of claim 1 wherein said output device comprises an electronic display.

17. The system of claim 1 wherein said output device is operable to output information indicating whether said visitation session is approved.

18. The system of claim 1 wherein said output device is operable to output instructions to the visitor.

19. The system of claim 1 wherein said output device is operable to output an estimated wait time until the visitation session is to begin.

20. An electronic visitation registration system comprising:
means for identifying a visitor to a controlled-environment facility;
means for identifying a resident of said controlled-environment facility with whom said visitor desires a visitation session;
means for determining whether said visitation session is approved; and
means for communicating information to said visitor, wherein said information comprises information indicating whether said visitation session is approved.

21. The system of claim 20 wherein said means for identifying said visitor comprises:
means for reading identification information from an identification card.

22. The system of claim 20 further comprising:
means for conducting a background check.

23. The system of claim 22 further comprising:
means for communicating background information from said background check to authorized personnel of said controlled-environment facility.

24. The system of claim 22 wherein said means for determining whether said visitor is approved for said visitation session is based at least in part on said background check.

25. The system of claim 20 wherein said means for determining whether said visitation session is approved is based at least in part on a current status of said controlled-environment facility.

26. The system of claim 20 wherein said means for determining whether said visitation session is approved is based at least in part on a visitation status of said resident.

27. The system of claim 20 wherein said visitation session is desired for a future date, and wherein the system further comprises:
means for scheduling said future visitation session.

28. The system of claim 20 wherein said information communicated to said visitor comprises an estimated wait time until said visitation session is to begin.

29. The system of claim 20 wherein said information communicated to said visitor comprises instructions about the visitation session.

30. The system of claim 20 further comprising:
means for communicatively coupling to a communication network.

31. The system of claim 20 further comprising:
said means for identifying said visitor comprises means for receiving identification information via said communication network;
said means for identifying said resident comprises means for receiving identification information via said communication network; and
said means for communicating said information to said visitor comprises means for communication said information to said visitor via said communication network.

32. The system of claim 31 wherein said means for communicating comprises:
means for communicating to said visitor via said communication network information informing said visitor of cancellation of a previously scheduled visitation session.

33. The system of claim 20 wherein said controlled-environment facility comprises a correctional facility.

34. A method of registering for a visitation session in a controlled-environment facility comprising:
identifying, by an electronic visitation registration system, a visitor to said controlled-environment facility;
identifying, by said electronic visitation registration system, a resident of said controlled-environment facility with whom said visitor desires said visitation session;
determining, by said electronic visitation registration system, whether said visitation session is approved; and
communicating, by said electronic visitation registration system, information to said visitor, wherein said information comprises information indicating whether said visitation session is approved.

35. The method of claim 34 wherein said identifying said visitor comprises reading identification information from an identification card.

36. The method of claim 34 further comprising:
conducting, by said electronic visitation registration system, a background check on said visitor.

37. The method of claim 36 wherein said background check comprises a criminal background check.

38. The method of claim 36 comprising:
communicating, from said electronic visitation registration system, information from said background check to authorized personnel of said controlled-environment facility.

39. The method of claim 36 wherein said determining whether said visitation session is approved is based at least in part on said background check.

40. The method of claim 34 wherein said determining whether said visitation session is approved is based at least in part on a current status of said controlled-environment facility.

41. The method of claim 34 wherein said determining whether said visitation session is approved is based at least in part on a visitation status of said resident.

42. The method of claim 34 wherein said visitation session is desired by said visitor for a future date, the method further comprising:
scheduling, by said electronic visitation registration system, said visitation session for said future date.

43. The method of claim 34 wherein said information communicated to said visitor comprises:
an estimated wait time for said visitation session.

44. The method of claim 34 wherein said information communicated to said visitor comprises instructions regarding said visitation session.

45. The method of claim 34 wherein said identifying said visitor, said identifying said resident, said determining whether said visitation session is approved, and said communicating are performed while said visitor is remote from said controlled-environment facility.

46. The method of claim 34 further comprising:
wherein said identifying, by said electronic visitation registration system, said visitor comprises identifying said visitor based at least in part on information received by said electronic visitation registration system via a communication network; and
wherein said identifying, by said electronic visitation registration system, said resident comprises identifying said resident based at least in part on information received by said electronic visitation registration system via said communication network.

47. The method of claim 46 further comprising:
wherein said communicating comprises communicating said information to said visitor via said communication network.

48. The method of claim 34 further comprising:
determining, by said electronic visitation registration system, that a previously scheduled visitation session for said visitor is to be canceled; and
communicating information to said visitor informing said visitor of the cancelled visitation session.

49. A method comprising:
gathering registration information, wherein said registration information includes information about a visitor to a facility and information about a resident of said facility with whom said visitor desires a visitation session;
storing said registration information to computer-readable storage medium; recording communication between said visitor and said resident during said visitation session;
storing said recorded communication to computer-readable storage medium; and
relationally linking said stored registration information and said stored recorded communication.

50. The method of claim 49 wherein said storing said registration information comprises:
storing said registration information as a registration record in a registration database.

51. The method of claim 49 wherein said storing said recorded communication comprises:
storing said recorded communication as a visitation session record in a visitation session database.

52. The method of claim 49 wherein said registration information comprises information identifying said visitor.

53. The method of claim 49 wherein said registration information comprises information from a background check conducted on said visitor.

54. The method of claim 49 wherein said registration information comprises an image of said visitor.

55. The method of claim 54 wherein said image is an image captured during registration of said visitor for said visitation session.

56. The method of claim 49 wherein said information about said resident comprises identification of said resident.

57. The method of claim 49 wherein said recording communication between said visitor and said resident during said visitation session comprises:
recording video of said visitation session.

58. The method of claim 49 wherein said recording communication between said visitor and said resident during said visitation session comprises:
recording audio of said visitation session.

59. The method of claim 49 further comprising storing date and time of said visitation session to computer-readable storage medium.
